(19) Europäisches Patentamt / European Patent Office / Office européen des brevets

(11) **EP 4 050 571 B1**

(12) **EUROPEAN PATENT SPECIFICATION**

(45) Date of publication and mention of the grant of the patent:
**18.02.2026 Bulletin 2026/08**

(21) Application number: **22157508.7**

(22) Date of filing: **18.02.2022**

(51) International Patent Classification (IPC):
**G06V 10/82** (2022.01)   **G10L 25/57** (2013.01)
**G06V 40/40** (2022.01)   **G06V 40/70** (2022.01)
**G10L 25/51** (2013.01)

(52) Cooperative Patent Classification (CPC):
**G06V 10/82; G06N 3/0464; G06N 3/09;
G06V 40/40; G06V 40/70; G10L 25/51; G10L 25/57**

(54) **METHODS AND APPARATUS TO PERFORM DEEPFAKE DETECTION USING AUDIO AND VIDEO FEATURES**

VERFAHREN UND VORRICHTUNG ZUR DURCHFÜHRUNG EINER DEEPFAKE-DETEKTION UNTER VERWENDUNG VON AUDIO- UND VIDEOMERKMALEN

PROCÉDÉS ET APPAREIL PERMETTANT D'EFFECTUER UNE DÉTECTION D'HYPERTRUCAGE À L'AIDE DE CARACTÉRISTIQUES AUDIO ET VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2021 US 202117183323**

(43) Date of publication of application:
**31.08.2022 Bulletin 2022/35**

(73) Proprietor: **McAfee, LLC**
**San Jose, CA 95002 (US)**

(72) Inventor: **MATHEWS, Sherin M.**
**Santa Clara, 95054 (US)**

(74) Representative: **Samson & Partner Patentanwälte mbB**
**Widenmayerstraße 6**
**80538 München (DE)**

(56) References cited:
• CHUGH KOMAL ET AL: "Not made for each other- Audio-Visual Dissonance-based Deepfake Detection and Localization made for each other- Audio-Visual Dissonance-based Deepfake Detection and Localization", 1 June 2020 (2020-06-01), XP055945623, Retrieved from the Internet <URL:https://arxiv.org/pdf/ 2005.14405v2.pdf> [retrieved on 20220724], DOI: 10.1145/1122445.1122456
• CHUNG JOON SON ET AL: "Out of Time: Automated Lip Sync in the Wild", 16 March 2017, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 251 - 263, ISBN: 978-3-540-74549-5, XP047411008

**Description**

FIELD OF THE DISCLOSURE

This disclosure relates generally to artificial intelligence, and, more particularly, to methods and apparatus to perform deepfake detection using audio and video features.

BACKGROUND

A deepfake is media (e.g., an image, video, and/or audio) that was generated and/or modified using artificial intelligence. In some examples, a deepfake creator may combine and/or superimpose existing images and/or video onto a source image and/or video to generate the deepfake. As artificial intelligence (e.g., neural networks, deep learning, machine learning, and/or any other artificial intelligence technique) advances, deepfake media has become increasingly realistic and may be used to generate fake news, pranks, and/or fraud.

Document "Not made for each other- Audio-Visual Dissonance-based Deepfake Detection and Localization" from Chugh Komal et al, realtes to detection of deepfake videos based on the dissimilarity between the audio and visual modalities, termed as Modality Dissoncance Score (MDS).

Document "Out of Time: Automated Lip Synce in the Wild" from Chung Joon Son et al, relates to determination of audio-video synchronization between mouth motion and speec in a video.

SUMMARY OF THE INVENTION

The invention is defined as set out in the appended claims.

BRIEF DESCRIPTION OF THE FIGURES

FIG. 1 illustrates a block diagram of an example environment in which deepfake classification learning algorithms may be trained and/or deployed to an end user.
FIG. 2 is a block diagram of an example implementation of the deepfake analyzer of FIG. 1.
FIG. 3A illustrates an example implementation of the video model of FIG. 2.
FIG. 3B illustrates an example implementation of the audio model of FIG. 2.
FIG. 4 is a block diagram of an example implementation of the artificial intelligence trainer of FIG. 1.
FIGS. 5-7 are flowcharts representative of example machine readable instructions which may be executed to implement the deepfake analyzer of FIGS. 1 and/or 2 to perform deepfake detection.
FIG. 8 is a flowchart representative of example machine readable instructions which may be executed to implement the artificial intelligence trainer of FIGS. 1 and/or 4 to train and/or modify a deepfake classification models.
FIG. 9 is a block diagram of an example processing platform structured to execute the instructions of FIGS. 5-7 to implement the deepfake analyzer of FIGS. 1 and/or 3.
FIG. 10 is a block diagram of an example processing platform structured to execute the instructions of FIG. 8 to implement the artificial intelligence trainer of FIGS. 1 and/or 4.
FIG. 11 is a block diagram of an example software distribution platform to distribute software (e.g., software corresponding to the example computer readable instructions of FIGS. 5-8) to client devices such as consumers (e.g., for license, sale and/or use), retailers (e.g., for sale, re-sale, license, and/or sub-license), and/or original equipment manufacturers (OEMs) (e.g., for inclusion in products to be distributed to, for example, retailers and/or to direct buy customers).

The figures are not to scale. In general, the same reference numbers will be used throughout the drawing(s) and accompanying written description to refer to the same or like parts. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. Stating that any part is in "contact" with another part means that there is no intermediate part between the two parts.

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

DETAILED DESCRIPTION

As open source materials become prevalent and computing technology advances, more people have access to a larger variety of tools to create more advanced software. As more advanced software is developed, the ability to use such software for malicious purposes increases. For example, the production of deepfakes has significantly increased. Deepfakes may be used to create fake videos of people (e.g., celebrities or politicians) that misrepresent them by manipulating their identity, words, and/or actions. As artificial intelligence (AI) advances, deepfakes are becoming increasingly realistic. Being able to identify and detect deepfakes accurately is important, as deepfakes could be detrimental (e.g., fake emergency alerts, fake videos to destroy someone's reputation, or fake video and/or audio of politicians during an election).

Because deepfakes can be convincing, it is difficult and/or even impossible for humans to identify "real" (e.g., authentic) vs. "deepfake" media file. AI can be used to process and analyze a media file (e.g., an images and/or video file) to classify it as "real" or "deepfake" based on whether the audio features of the media match the video features of the media. For example, there are slightly different mouth movements that humans make to generate particular sounds. Many deepfake videos are not advanced enough to closely align the audio sounds to the corresponding human mouth movements for the audio sounds. Accordingly, even though, to the human eye, the audio aligns with the video, the sounds being made in a deepfake video may not be consistent with the audio being output for the deepfake video.

Examples disclosed herein make use of an (AI) model(s) (e.g., neural networks, convolutional neural networks (CNNs), machine learning models, deep learning models, etc.) that analyze media files based on audio and video features. For example, a first AI model may be used to classify the sound that a person is saying based on the audio components of the media. A second AI model may be used to classify the sound that the person is saying based on a video component of the media. If the video is real, the output of the first sound-based AI model will match the output of the second video-based AI model within a threshold amount. However, if the video is a deepfake, the output of the first sound-based AI model will be different than the output of the second video-based AI model by more than the threshold.

Examples disclosed herein compare the sound classification based on an audio component of media to the sound classification based on a video component of the media to see how similar the classifications are. If the comparison satisfies a similarity threshold, examples disclosed herein determine that the media is authentic and if the comparison does not satisfy the threshold, examples disclosed herein determine that the media is a deepfake.

If media has been classified as deepfake, examples disclosed herein may perform different actions to flag, warn, and/or mitigate issues related to the deepfake media. For example, if the deepfake media was output by a website, examples disclosed herein may send a flag to monitor of the website to warn of the potential deepfake media. Additionally or alternatively, examples disclosed herein may block, blur, and/or output a popup or other warning message to a user that the media is a deepfake. Additionally or alternatively, the deepfake media and/or information corresponding to the deepfake media may be transmitted to a server to track the use of deepfake media. Additionally or alternatively, the deepfake media and/or information corresponding to the deepfake media may be transmitted to a server corresponding to the training of the deepfake detection models to further tune or adjust deepfake detection models.

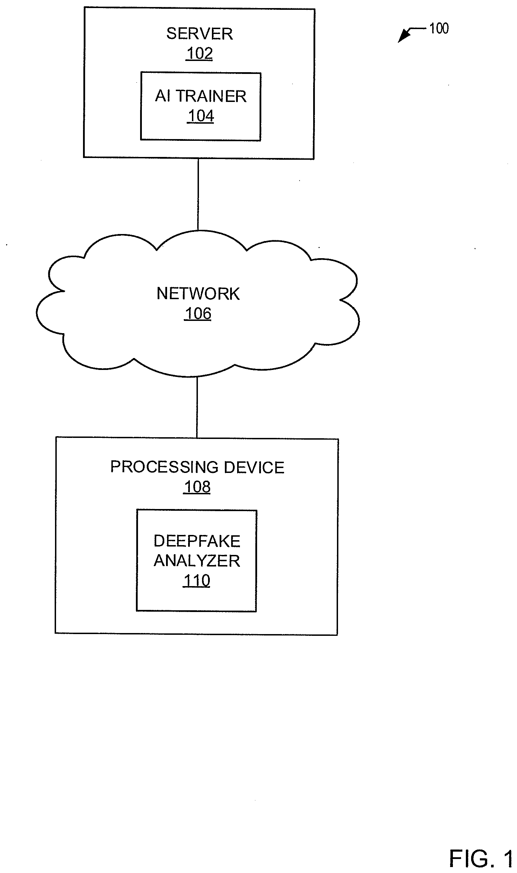

FIG. 1 illustrates a block diagram of an example environment 100 including an example server 102, an example AI trainer 104, an example network 106, an example processing device 108, and an example deepfake analyzer 110. Although the example environment 100 includes the deepfake analyzer 110 in the example processing device 108, the example deepfake analyzer 110 may additionally or alternatively be implemented in the example server 102, as further described below.

The example server 102 of FIG. 1 includes the example AI trainer 104. The AI trainer 104 trains the AI model(s) based on a dataset of pre-classified media. For example, the AI trainer 104 may utilize preclassified media frames with a classification of a sound being made by a human to audio (e.g., to train the audio-based model) and/or a classification of a sound being made by a human to video (e.g., to train the video-based model). The AI trainer 104 may utilize all or part of the dataset to train the AI models to learn to classify media frames based on the audio and/or video features of the media. In some examples, authentic media and/or deepfake media may be used to train the models. In such examples, the authentic media may be prelabeled labeled as authentic and the deepfake media may be prelabelled as deepfake. In some examples, the training of deepfake classification models includes using a portion of the known dataset for training and a portion of the known dataset for testing the initially trained model. In this manner, the AI trainer 104 can use any misclassifications (e.g., false negatives or false positives) from the initially trained model to tune the initially trained model to avoid future misclassifications. Additionally, the AI trainer 104 may train and/or otherwise configure the comparison methods of the audio-based classification to the video-based classifications. For example, the AI trainer 104 may use the prelabeled authentic media and the prelabeled deepfake media to be able to determine a comparison technique, threshold similarity values, etc. for determining when media is a deepfake or authenticate based on the audio and video classification corresponding to the media. In some examples, the AI trainer 104 may determine that particular sound classifications can have a smaller similarity threshold to identify a deepfake or a particular similarity comparison technique should be used for particular sound classifications. In some examples, the AI trainer 104 may determine that particular sound classifications do not correlate well to a determination of deepfake and may develop a comparison technique that prevents comparisons of particular sound classifications.

In some examples, the AI trainer 104 may receive feedback (e.g., classified deep fake media information, classified authentic media information, verified misclassification information, etc.) from the example processing device 108 after the deepfake analyzer 110 has performed classifications locally using the deployed model. The AI trainer 104 may use the feedback identify reasons for a misclassification. Additionally or alternatively, the AI trainer 104 may utilize the feedback and/or provide the feedback to a user to further tune the deepfake classification models.

After the example AI trainer 104 trains models (e.g., the audio model, the video model, and/or the comparison model), the AI trainer 104 deploys the models so that it can be implemented on another device (e.g., the example processing device 108). In some examples, a trained model corresponds to a set of weights that are applied to neurons in a CNN. If a model implemented the set of weights, the model will operate in the same manner as the trained model. Accordingly, the example AI trainer 104 can deploy the trained model by generating and transmitting data (e.g., data packets, instructions, an executable) that identifies how to weight the neurons of a CNN to implement the trained model. When the example processing device 108 receives the data/instructions/executable (e.g., the deployed model), the processing device 108 can execute the instructions to adjust the weights of the local model so that the local model implements the functionality of the trained classification model.

The example network 106 of FIG. 1 is a system of interconnected systems exchanging data. The example network 106 may be implemented using any type of public or private network such as, but not limited to, the Internet, a telephone network, a local area network (LAN), a cable network, and/or a wireless network. To enable communication via the network 106, the example processing device 108 and/or the server 102 includes a communication interface that enables a connection to an Ethernet, a digital subscriber line (DSL), a telephone line, a coaxial cable, or any wireless connection, etc.

The example processing device 108 of FIG. 1 is a device that receives instructions data and/or an executable corresponding to a deployed model. The deepfake analyzer 110 of the processing device 108 uses the instructions, data, and/or executable to implement the deployed models locally at the processing device 108. The example processing device 108 of FIG. 1 is a computer. Alternatively, the example processing device 108 may be a laptop, a tablet, a smart phone, a personal processor, a server, and/or any other type of processing device. In the example of FIG. 1, the example processing device 108 includes the example deepfake analyzer 110. Additionally or alternatively, the example deepfake analyzer 110 may be included in the example server 102.

The example deepfake analyzer 110 of FIG. 1 configures a local model (e.g., a neural network) to implement the deployed deepfake classification models (e.g., the received instructions that identify how to adjust the weights of a CNN to implement the trained classification models, how to process the media prior to inputting in the models, and/or the characteristics of the comparison of the outputs of the models). After the deployed deepfake classification models are implemented by the example deepfake analyzer 110, the deepfake analyzer 110 obtains an input media file and generates an output identifying whether the input media file is "real" or "deepfake." For example, the deepfake classification models may be trained CNNs and/or algorithms that process the media, classify a sound of the media based on audio frame(s) of the media, classify a sound of the media based on video frame(s) of the media, compare the output classifications, and determine whether the media is authentic or a deepfake based on the comparison. The example deepfake analyzer 110 generates a report which includes the media, media identification information, the classification, and/or any other information related to the classification and transmits the report to the example AI trainer 104 at the server 102. In some examples, the deepfake analyzer 110 may take additional or alternative actions including one or more of blocking the video, generating a popup or other indication (e.g., via a user interface of the processing device 108) that the media is a deepfake, transmitting a flag and/or the report emote to a monitor of the media (e.g., a database proprietor where the media is presented), transmitting the flag and/or the report to an entity that monitors deepfake usage, etc.

In some examples, the deepfake analyzer 110 of FIG. 1 may be implemented in the AI trainer 104. For example, the deepfake analyzer 110 may be utilized to provide feedback when classifying a media file as real or deepfake. In such an example, the server 102 may include a database (e.g., memory) including a training dataset of, for example, 1000 images and/or video frames. Some of the images are real (e.g., authentic) while others are deepfakes, the classifications (e.g., real vs. deepfake) are known to the AI trainer 104 prior to training. The example AI trainer 104 may initially train a deepfake classification model using, for example, 700 out of the total number of images and/or video frames. Once the initial training is complete, the trained deepfake classification models are implemented in the deepfake analyzer 110. Once implemented, for example. 100 of the remaining known video frames from the training dataset can be provided as an input to the initially trained models for testing. In this manner, the AI trainer 104 can compare the outputs of the initially trained model to the known classifications to identify misclassifications (e.g., when the output classification for the input media file does not match the known classification). In some examples, the example deepfake analyzer 110 can provide information to a user or the AI trainer 104 to determine how/why the misclassifications occurred. In this manner, the AI trainer 104 can tune the initially trained deepfake classification model based on the feedback (e.g., related to any misclassified media). This process may continue any number of times (e.g., using any number of the 200, for example, remaining known image and/or video frames from the training dataset) to further tune the deepfake classification models before deploying to the example processing device 108.

In some examples, the server 102 of FIG. 1 deploys the deepfake analyzer 110 to the example processing device 108. For example, a user of the processing device 108 may download the deepfake analyzer 110 from the server 102. In another example, the server 102 may automatically deploy the deepfake analyzer 110 to the processing device 108 via the network 106 (e.g., as part of a software upgrade and/or software update). In this manner, the example processing device 108 can identify deepfakes locally after the server 102 has deployed the deepfake analyzer 110 to the processing device 108.

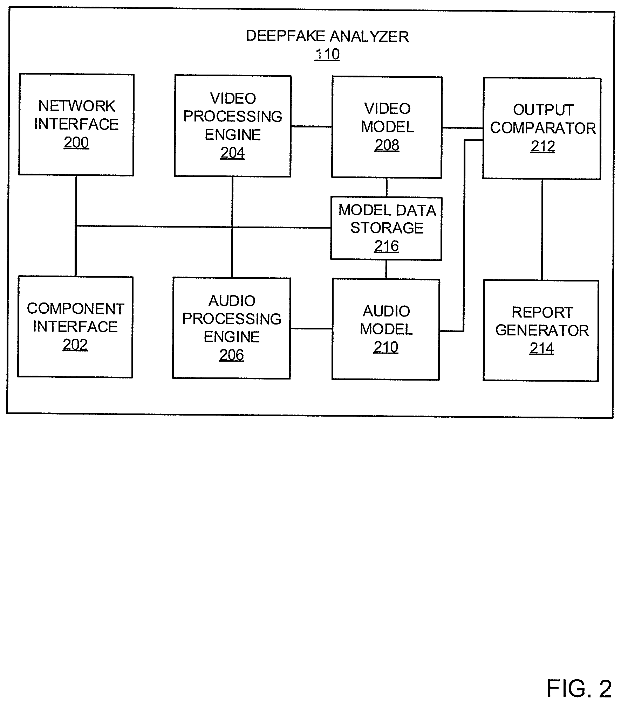

FIG. 2 is block diagram of an example implementation of the deepfake analyzer 110 of FIG. 1. The example deepfake analyzer 110 includes an example network interface 200, an example component interface 202, an example video processing engine 204, an example audio processing engine 206, an example video model 208, an example audio model 210, an example output comparator 212, an example report generator 214, and an example model data storage 216.

The example network interface 200 of FIG. 2 transmits and/or receives data to/from the example AI trainer 104 via the example network 106 (e.g., when the deepfake analyzer 110 is implemented in the example processing device 108). For example, the network interface 200 may receive trained model data (e.g., instructions that identify a set of weights to apply to the neurons of a CNN to implement the trained models), instructions on how to process the video and/or audio prior to inputting into a model, and/or how to compare the model outputs to classify media as authentic or deepfake from the example AI trainer 104. The trained model data corresponds to instructions to implement a deepfake classification model based on audio and/or video frames of media corresponding to the training that occurred at the AI trainer 104. Additionally, the network interface 200 may transmit reports to the example AI trainer 104. For example, when the example deepfake analyzer 110 classifies an obtained media file, the deepfake analyzer 110 may generate a report identifying or otherwise including the input media file, the classification (e.g., real/deepfake and/or the classification score), information related to the input media file (e.g., file name, metadata, timestamp, where the media file was obtained from, etc.). The example network interface 200 can transmit the report to the AI trainer 104 to provide feedback for subsequent training and/or modifying of the deepfake model. Additionally, the network interface 200 may transmit the report and/or a deepfake flag to a server that monitors the media, a server that monitors the source of the media, etc.

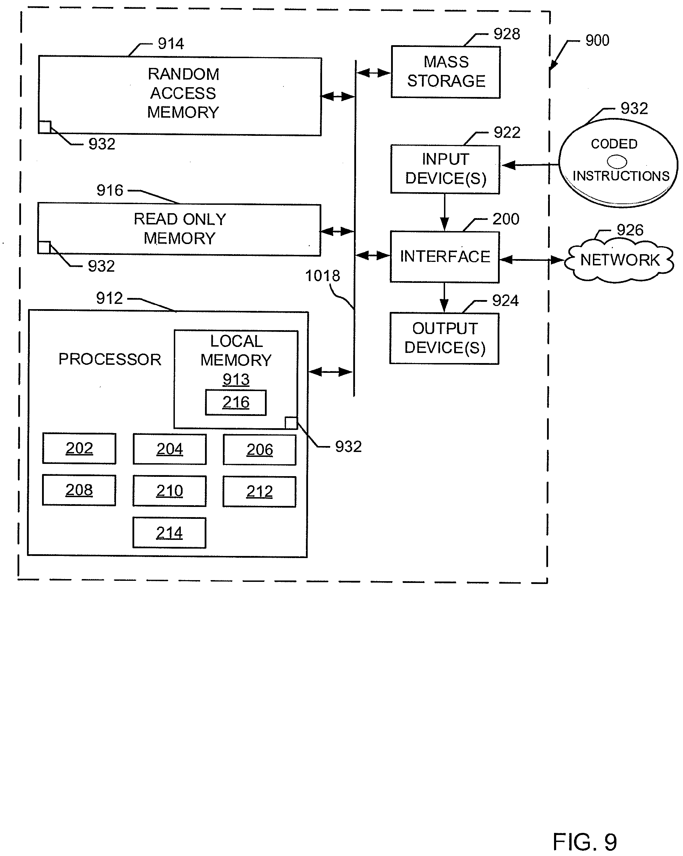

The example component interface 202 of FIG. 2 transmits and/or receives data to/from other components of the example processing device 108 and/or the AI trainer 104 (e.g., when the deepfake analyzer 110 is implemented in the example server 102). For example, the component interface 202 may receive media files (e.g., images and/or video) that are stored in and/or received by the example processing device 108 for deepfake classification. When the example deepfake analyzer 110 is implemented in the example server 102, the component interface 202 may receive trained model data and provide feedback (e.g., reports) to the example AI trainer 104. In some examples, the component interface 202 may interface with storage and/or memory (e.g., any one of the example memories 913, 914, 916 of FIG 9) of the example processing device 108 and/or AI trainer 104 to store reports.

The example video processing engine 204 of FIG. 2 processes the video frame(s) of the media to generate a visual feature cube that is used as an input into the video model 208. The visual feature cube may have processed video data from a plurality of video frames. In this manner, the video model 208 can classify a sound being made by a person in the media based on the plurality of movements of the user within the plurality of frames. The example video processing engine 204 processes the media by performing dynamic Gamma correction framework on the video portion of the media. Additionally, the video processing engine 204 is post-processed to maintain a constant frame rate (e.g., 30 frames per second). After the Gamma correction and/or post-processing, the video processing engine 204 detects and/or tracks faces in the video. In some examples, the video processing engine 204 detects and/or tracks the faces in the video using a OpenCV dlib library. After the faces are detected, the video processing engine 204 crop the frame(s) to include the mouth(es) of the detected and/or tracked face(s). Although examples disclosed herein correlate mouth movement to audio sounds, examples disclosed herein may be utilized with any type of audio/video correlation. In such examples, the video processing engine 204 may crop the frame(s) to include a region of interest that corresponds to the audio/video correlation. In some examples, the video processing engine 204 resizes the cropped frame(s) to a uniform and concatenated size to form the input feature vector(s) for respective frame(s).

The video processing engine 204 of FIG. 2 combines input feature vector(s) corresponding to the frame(s) to generate the visual feature cube. The visual feature cube may be sited to A*B*C, where A is the number of consecutive image frames extracted, and B*C is the resized image of the mouth region. For example, if the frame rate of each video clip used is 30 frames per second, 9 successive image frames are extracted for a 0.3 second visual stream. If the resized image size of the extracted mouth/lip region is 100*100, the final input of the visual stream of the network will be a cube of size 9*100*100, where 9 is the number of frames that represent the temporal information.

The example audio processing engine 206 of FIG. 2 processes the video frame(s) of the media to generate a speech feature cube that is used as an input into the audio model 210. Although examples disclosed herein corresponds to a speech feature cube, examples disclosed herein may be utilized with any type of audio that can be matched up with video. The speech feature cube may have processed audio data from a plurality of audio frames of the media. In this manner, the audio model 210 can classify a sound being made by a person in the media based on the audio from one or more audio frames of the media. The example audio processing engine 206 processes the media by extracting the audio files from the media (e.g., using a ffmpeg framework). In some examples, the most commonly used features for speech recognition in audio files are mel frequency cepstral coefficients (MFCCs), which are derived from the cepstral representation of an audio stream. The MFCCs of an audio signal describe the overall shape of a spectral envelope. However, the MFCCs cannot be directly used while generating MFCCs features because the correlations between energy coefficients are eliminated and the order of filter bank energies is changed, which disrupts a locality property. Thus, the audio processing engine 206 ensures that the MFCCs features possess a local characteristics by modifying the MFCCs features to use the log-energies derived directly from the non-overlapping windows. For example, the audio processing engine 206 determines the non-overlapping windows and determine the log-energy features of the MFCCs for the non-overlapping windows. The log-energies of the MFFCs is herein referred to as a spectrogram. The example processing engine 206 determines first and second order derivatives of the modified MFCC features (e.g., the log energy features of the MFCCs).

The example audio processing engine 206 of FIG. 2 generates the speech feature cube by combining the spectrogram, the first order derivative of the log energy features of the MFCCs and the second order derivative of the log energy features of the MFCCs. For example, if the audio processing engine 206 derives 9 stacked frames from a 0.3-second input signal clip and the spectrogram results in a total of 40 MFCC features per frame, the audio processing engine 206 outputs nine speech feature vectors sized to 40*3, thereby resulting in a 9*40*3 sized speech feature cube for the nine frames.

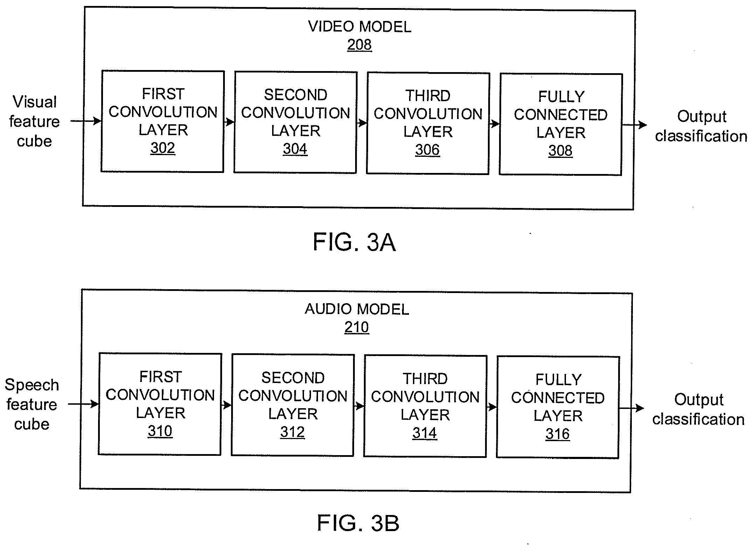

The example video model 208 of FIG. 2 is a neural network (e.g., a coupled three dimensional CNN). However, the video model 208 may be a machine learning model, a deep learning model, another type of neural network, and/or any other type of model and/or network. Initially, the example video model 208 is untrained (e.g., the neurons are not yet weighted). However, once the instructions are received from the example server 102, the neurons of the example video model 208 are weighted to configure the video model 208 to operate according to the trained video model generated by the example AI trainer 104. Once trained, the example video model 208 obtains an input video features cube and performs a classification of a sound that corresponds to the speech of a human in the video based on the video features cube. For example, the video model 208 analyzes a lip motion's spatial and temporal information that is fused for exploiting the temporal correlation corresponding to a sound. The video model 208 performs convolutional operations on successive temporal frames for the video stream to help find the correlation between high-level temporal and spatial information. The video model 208 generates a probability score (e.g., between 0 and 1 inclusive) that corresponds to one or more sounds that correspond to the speech of a human in the media. The example video model 208 outputs the probability score for the video features cube to the example output comparator 212. An example of the video model 208 is further described below in conjunction with FIG. 3A.

The example audio model 210 of FIG. 2 is a neural network (e.g., a coupled three dimensional CNN). However, the audio model 210 may be a machine learning model, a deep learning model, another type of neural network, and/or any other type of model and/or network. Initially, the example audio model 210 is untrained (e.g., the neurons are not yet weighted). However, once the instructions are received from the example server 102, the neurons of the example audio model 210 are weighted to configure the audio model 210 to operate according to the trained audio model generated by the example AI trainer 104. Once trained, the example audio model 210 obtains an input speech features cube and performs a classification of a sound that corresponds to the speech of a human in the audio of the media based on the speech features cube. For example, the audio model 210 the extracted energy features are considered as a spatial dimensions, and the stacked audio frames create the temporal dimensions. The video model 208 performs convolutional operations on successive temporal frames for the audio stream to help find the correlation between high-level temporal and spatial information. The audio model 210 generates a probability score (e.g., between 0 and 1 inclusive) that corresponds to one or more sounds that correspond to the speech of a human in the media. The example audio model 210 outputs the probability score for the speech features cube to the example output comparator 212. An example of the audio model 210 is further described below in conjunction with FIG. 3B.

The example output comparator 212 of FIG. 2 compares the output of the video model 208 with the corresponding output of the audio model 210 (e.g., the output corresponding to the media for the same duration of time). The example output comparator 212 performs a similarity calculation to determine if the output of the audio model 208 and the output of the video model 210 correspond to a deepfake classification or an authentic classification. In some examples, the output comparator 212 bases the classification using a distinction loss technique (e.g., a discriminative distance metric to optimize the coupling of the audio to the video). The example output comparator 212 may utilize the distinction loss to accelerate convergence speed and prevent over-fitting. The example output comparator 212 may determine the distinction loss using the below Equations 1 and 2.

$$L(Y, X) = \frac{1}{N} \sum_{i=1}^{N} L_W(Y_i, (X_{p1}, X_{p2})_i \quad \text{(Equation 1)}$$

$$L_W(Y_i, (X_{p1}, X_{p2})_i = Y D_W(X_{p1}, X_{p2})^2 + (1 - Y) \max\{0, \mu - D_W(X_{p1}, X_{p2})\}^2 +$$

$$\lambda ||W||_2 \quad \text{(Equation 2)}$$

In the above-Equations 1 and 2, N is the number of training samples, $(X_{p1}, X_{p2})$ is the ith input pair (e.g., the output of the video model 208 and the output of the audio model 210), $Y_i$ is the corresponding label, $D_w(X_{p1}, X_{p2})$ is the Euclidean distance between the outputs of the network with $(X_{p1}, X_{p2})$ and the input last term in Equation 2 is for regularization with $\lambda$ being the regularization parameter and $\mu$ is the predefined margin. The distinction loss is a mapping criterion, which places genuine pairs (e.g., audio output video output pairs) to nearby authentic pairs and fake (deepfake) pairs to distant manifolds in an output space. The criterion for choosing pairs is the Euclidean distance between the pair in the output embedding feature space. A no-pair-selection case is when all the deepfake pairs lead to larger output distances than all the authentic pairs. The example output comparator 212 utilizes this criteria for distinction between authentic and deepfake media for both training and test cases. Accordingly, if the example output comparator 212 determines that the resulting distinction loss is closer (e.g., based on a Euclidean distance) to the authentic pairs (e.g., or an authentic pair representative of the authentic pairs from training) than to the deepfake pair (or a deepfake pair representative of the deepfake pairs from training), then the example output comparator 212 determines that the media is authentic. Additionally or alternatively, the output comparator 212 can determine if a comparison of the output of the video model 208 and the output of the audio model 210 corresponds to authentic media or deepfake media based on any comparison technique developed based on training data.

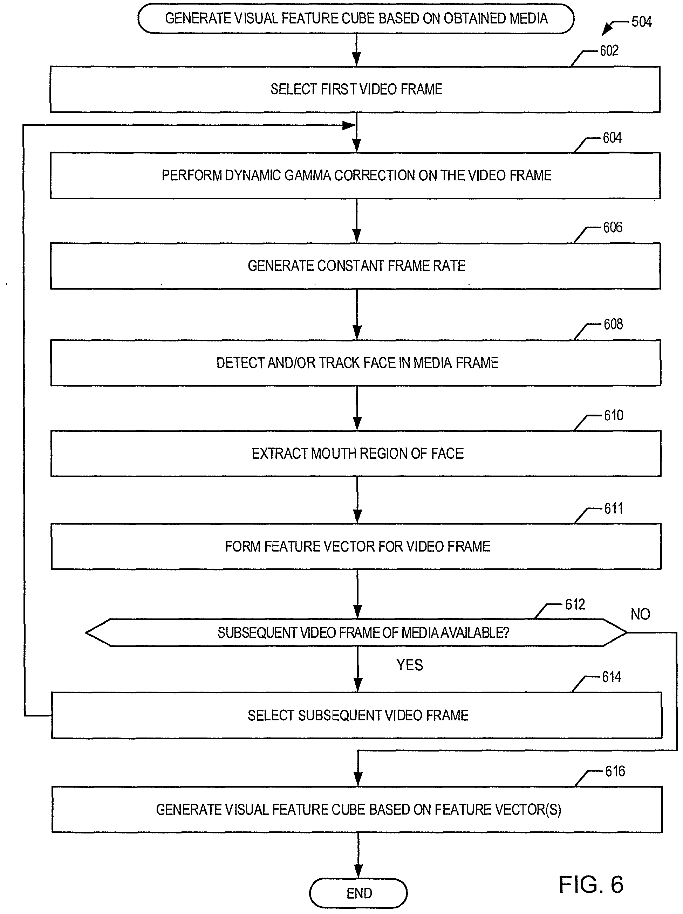

The example report generator 214 of FIG. 2 generates a report based on the output comparison of the output comparator 212 (e.g., corresponding to whether the media is authentic or a deepfake). The report may be a document and/or a signal. The report generator 214 may include the information related to the media in the report (e.g., the type of media, origin of the media, a timestamp of when the media was output, when the media was created, metadata corresponding to the media, where the media was output or obtained from, etc.) and/or may include the media file itself. In some examples, the report generator 214 may cause actions to occur at the processing device 108 in response to a determination that the media is a deepfake. For example, the report generator 214 may cause the media to be stopped, paused, and/or blocked. Additionally, the report generator 214 may display a warning, pop-up, and/or any other audio and/or visual indication for the processing device 108 that the media is a deepfake. In some example, the report generator 214 may pause the media and ask a user to confirm that they are aware that the media is a deepfake before continuing to watch, stream, and/or download the media. In some examples, the report generator 214 may transmit the report and/or a deepfake flag to the server 102 and/or another server (e.g., a server of the entity that is outputting the media, an entity that monitors media usage on the website that included the media, an entity that monitors deepfakes, etc.). The example report generator 214 may instruct the network interface 200 and/or the component interface 202 to transmit the report to the example AI trainer 104, the example server 102, and/or any other device. In some examples, the report generator 214 instructs the component interface 202 to interface with storage to store the report (e.g., in any one of the memories 913, 914, 916 of FIG. 6).

FIGS. 3A and 3B illustrate an example implementation of the video model 208 and the audio model 210 of FIG. 2. The example video model 208 includes an example first convolution layer 302, and example second convolution layer 304, an example third convolution layer 306, and an example fully connected layer 308. The example audio model 210 includes an example first convolution layer 310, and example second convolution layer 312, an example third convolution layer 314, and an example fully connected layer 316. Although the example models 208, 210 includes three convolution layers and a fully connected layer, the models 208, 210 may have any number of convolution layers and/or fully connected layers.

In operation, the first convolution layer 302, 310 obtains the feature cube (e.g., the visual feature cube for the video model 208 and the speech feature cube for the audio model 210). The first convolution layer 302, 310 is a 64 filter layer. Although, the first convolution layer 302, 310 can have any number of filters. The output of the first convolution layer 302, 310 (e.g., after being filtered by the 64 filters) is input into the second convolution layer 304, 312. The second convolution layer 304, 312 is a 128 filter layer. Although, the second convolution layer 304, 312 can have any number of filters. The output of the second convolution layer 304, 312 (e.g., after being filtered by the 128 filters) is input into the third volution layer 306, 314. The third convolution layer 306, 314 is a 256 filter layer. Although, the third convolution layer 306, 314 can have any number of filters. The output of the third convolution layer 306, 314 (e.g., after being filtered by the 256 filters) is input into the fully connected layer 308, 316. The fully connected layer 308, 316 which outputs the respective output classification. In some examples, dropout is used for the convolution layers 302, 304, 360, 310, 312, 314 before the last layer, where no zero-padding is used.

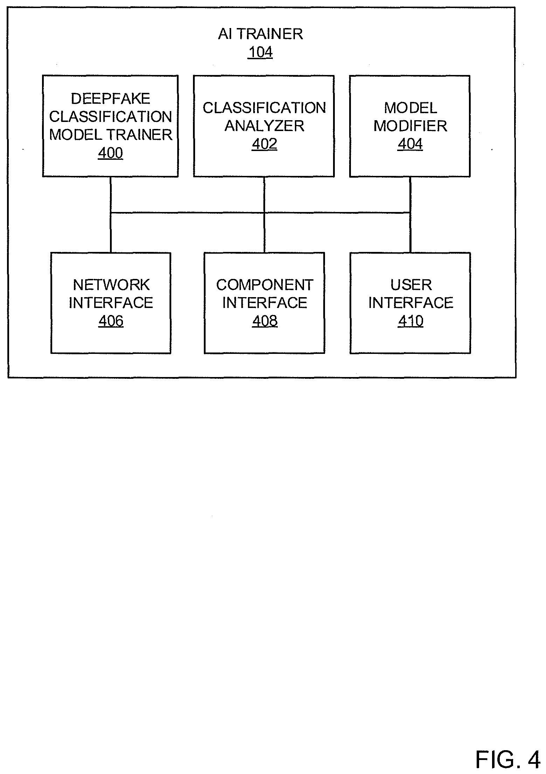

FIG. 4 is block diagram of an example implementation of the example AI trainer 104 of FIG. 1. The example AI trainer 104 includes an example deepfake classification model trainer 400, an example classification analyzer 402, an example model modifier 404, an example network interface 406, an example component interface 408, and an example user interface 410.

The example deepfake classification model trainer 400 of FIG. 4 generates models (e.g., trains a neural network and configures a comparison model) based on a dataset of media files that has known classifications (e.g., known to be real or deepfake). The deepfake classification model trainer 400 trains the audio/speech based model based on the dataset to be able to classify sounds for subsequent media files as based on audio of the known dataset used to train the audio-based model. Additionally, the deepfake classification model trainer 400 trains the video based model based on the dataset to be able to classify sounds for subsequent media files as based on mouth movement from video of the known dataset used to train the video-based model. Additionally, the deepfake classification model trainer 400 configures the comparison of the output of the audio-based model and the video-based model to determine whether the media is a deepfake or authentic. In some examples, the deepfake classification model trainer 400 trains one or more models using a portion of the dataset. In this manner, the example deepfake analyzer 110 can use the remaining portion of the dataset to test the initially trained models to verify the accuracy of the initially trained models.

The example classification analyzer 402 of FIG. 4 analyzes the classifications of input media file from the trained deep-fake classification models (e.g., the audio based model, the video based model, and the classification model) during testing. For example, after an initial training of one or more deep-fake classification models, a portion of a dataset of media files with known classifications may be used to test the one or more initially trained models. In such an example, the classification analyzer 402 may obtain the results of the classification of a particular media file of the dataset from the initially trained model and compare to the known classification of the particular media file to determine if the initially trained dataset misclassified the media file. If the classification analyzer 402 determines that the media file has been misclassified (e.g., because the output classification for the media from the trained model does not match the known classification), the classification analyzer 402 may further tune one or more of the initially generated models based on an additional set of training data..

In some examples, the classification analyzer 402 transmits a prompt to a user, administrator, and/or security researcher (e.g., via the user interface 410) to have the user, administrator, and/or security researcher diagnose possible reasons for a misclassification. In this manner, the user, administrator, and/or security researcher can instruct the model modifier 404 to tune or otherwise adjust the model(s) based on the reasons for the misclassification. In some examples, the classification analyzer 402 automatically determines possible reasons for the misclassification. For example, the classification analyzer 402 may process explainability maps for correctly classification from the dataset to identify patterns of correctly classified real and/or deepfake media file. An explainability map identifies regions or areas of an input image or audio that a model focused on (or found important) when generating the output classification. In this manner, the classification analyzer 402 may determine why misclassification occurred by comparing the explainability map of the misclassified media file to patterns of correctly classified explainability maps.

The example model modifier 404 of FIG. 4 modifies (e.g., tunes or adjusts) the deepfake classification model(s) based on the reasons for a misclassification. For example, if the reasons for misclassification were due to the deepfake classification model(s) using particular parts of an image or audio that are deemed unimportant by the classification analyzer 402, a user, and/or an administrator, the model modifier 404 adjusts the weights of the deepfake classification model to deemphasize the unimportant parts. In some examples, the model modifier 404 may adjust a deepfake classification model(s) based on results from deployed models. For example, if deepfake classification model(s) is/are deployed to the deepfake analyzer 110 in the processing device 108, the deepfake analyzer 110 may transmit reports to the example AI trainer 104. In such an example, the model modifier 404 may process the reports to determine if there are any deviations from the obtained explainability maps in the reports to the explainability maps generated during training. If there are deviations, the model modifier 404 may adjust the deepfake classification model(s) based on the deviation.

The example network interface 406 of FIG. 4 transmits and/or receives data to/from the example deepfake analyzer 110 via the example network 106 (e.g., when the deepfake analyzer 110 is implemented in the example processing device 108). For example, the network interface 406 may transmit trained model data (e.g., instructions that includes a set of weights to apply to the neurons of a CNN to implement the trained model) to the example processing device 108. Additionally, the network interface 406 may receive reports to the example deepfake analyzer 110.

The example component interface 408 of FIG. 4 transmits and/or receives data to/from the example deepfake analyzer 110 (e.g., when the deepfake analyzer 110 is implemented in the example server 102). For example, the component interface 408 transmits trained models to the example deepfake analyzer 110 and receives reports from the example deepfake analyzer 110.

The example user interface 410 of FIG. 4 interfaces with a user, administrator, and/or security researcher to display a prompt showing input media file, corresponding classification information, and/or corresponding explainability maps. In this manner, the example user, administrator, and/or security researcher can interface with the user interface 410 to provide reasoning for why an media was misclassified by one or more of the model(s).

While an example manner of implementing the example AI trainer 104 and/or the example deepfake analyzer 110 of FIG. 1 is illustrated in FIGS. 2 and/or 4, one or more of the elements, processes and/or devices illustrated in FIG. 1, 2, and/or 4 may be combined, divided, re-arranged, omitted, eliminated and/or implemented in any other way. Further, the example network interface 200, the example component interface 202, the example video processing engine 204, the example audio processing engine 206, the example video model 208, the example audio model 210, the example output comparator 212, the example report generator 214, the example model data storage 216, and/or, more generally, the example deepfake analyzer 110 of FIG. 2, and/or the example deepfake classification model trainer 400, the example classification analyzer 402, the example model modifier 404, the example network interface 406, the example component interface 408, user interface 410, and/or, more generally the example AI trainer 104 of FIG. 4 may be implemented by hardware, software, firmware and/or any combination of hardware, software and/or firmware. Thus, for example, any of , the example network interface 200, the example component interface 202, the example video processing engine 204, the example audio processing engine 206, the example video model 208, the example audio model 210, the example output comparator 212, the example report generator 214, the example model data storage 216, and/or, more generally, the example deepfake analyzer 110 of FIG. 2, and/or the example deepfake classification model trainer 400, the example classification analyzer 402, the example model modifier 404, the example network interface 406, the example component interface 408, user interface 410, and/or, more generally the example AI trainer 104 of FIG. 4 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of , the example network interface 200, the example component interface 202, the example video processing engine 204, the example audio processing engine 206, the example video model 208, the example audio model 210, the example output comparator 212, the example report generator 214, the example model data storage 216, and/or, more generally, the example deepfake analyzer 110 of FIG. 2, and/or the example deepfake classification model trainer 400, the example classification analyzer 402, the example model modifier 404, the example network interface 406, the example component interface 408, user interface 410, and/or, more generally the example AI trainer 104 of FIG. 4 is/are hereby expressly defined to include a non-transitory computer readable storage device or storage disk such as a memory, a digital versatile disk (DVD), a compact disk (CD), a Blu-ray disk, etc. including the software and/or firmware. Further still, the example AI trainer 104 and/or the example deepfake analyzer 110 of FIG. 1 may include one or more elements, processes and/or devices in addition to, or instead of, those illustrated in FIGS. 1, 2, and/or 4, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

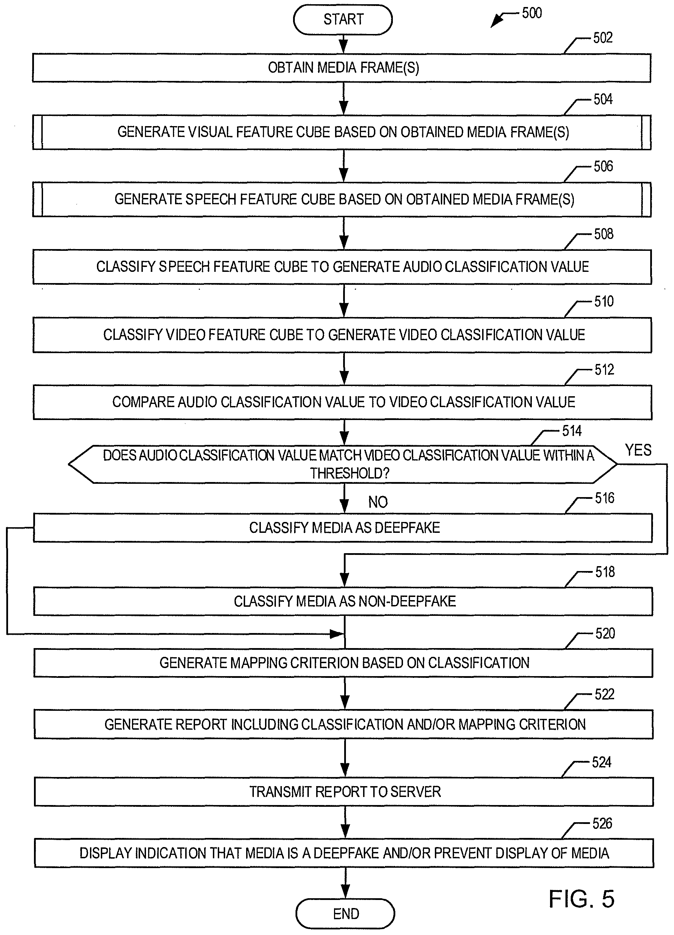

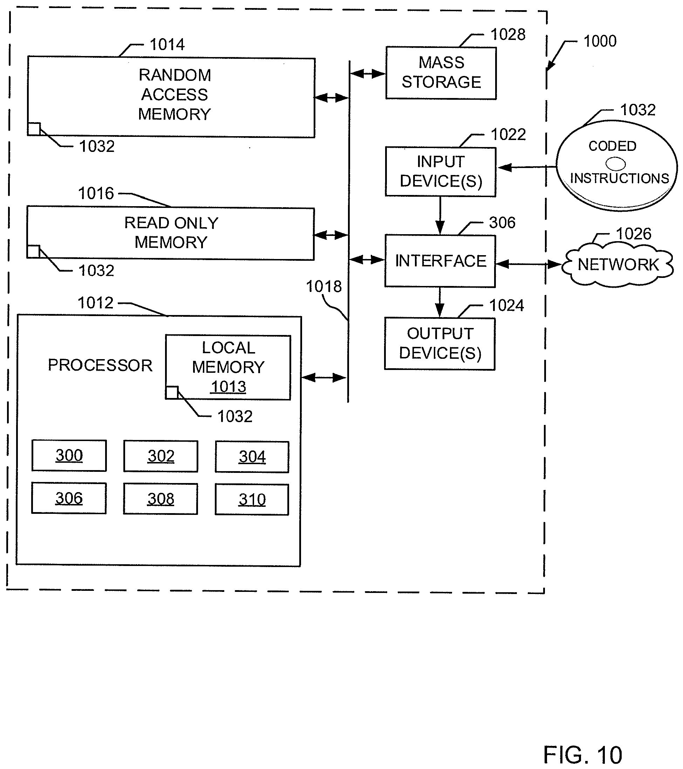

Flowcharts representative of example hardware logic, machine readable instructions, hardware implemented state machines, and/or any combination thereof for implementing the example AI trainer 104 and/or the example deepfake analyzer 110 of FIGS. 1, 2, and/or 4 are shown in FIGS. 5-8. The machine readable instructions may be one or more executable programs or portion(s) of an executable program for execution by a computer processor such as the processor 912, 1012 shown in the example processor platform 900, 1000 discussed below in connection with FIG. 9 and/or 10. The program may be embodied in software stored on a non-transitory computer readable storage medium such as a CD-ROM, a floppy disk, a hard drive, a DVD, a Blu-ray disk, or a memory associated with the processor 912, 1012, but the entire program and/or parts thereof could alternatively be executed by a device other than the processor 912, 1012 and/or embodied in firmware or dedicated hardware. Further, although the example program is described with reference to the flowcharts illustrated in FIGS. 5-8 many other methods of implementing the example AI trainer 104 and/or the example deepfake analyzer 110 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g.. servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 5-8 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 5 is an example flowchart representative of machine readable instructions 500 that may be executed to implement the example deepfake analyzer 110 of FIG. 2 to classify a media file as real /real or as a deepfake based on a comparison of an audio-based classification of speech from a human in the media and a video-based classification of the speech from the human in the video. The example instructions 500 may be used to implement the example deepfake analyzer 110 after a trained deepfake classification model has been deployed (e.g., from the example AI trainer 104) and implemented by the example video model 208, the example audio model 210, and the example output comparator 212. Although the instructions 500 are described in conjunction with the example deepfake analyzer 110 of FIG. 2, the instructions 500 may be described in conjunction with any type of deepfake analyzer. Although examples disclosed herein utilize speech feature cubes to determine deepfakes based on a comparison of mouth movement to speech features, examples disclosed herein may be used to with any type of audio feature cube to determine deepfakes based on a comparison of any type of video to corresponding audio features.

At block 502, the example component interface 202 obtains a media file from the example AI trainer 104 (e.g., a media file from a training dataset during testing) or from the processing device 108 (e.g., after the deepfake classification model information has been deployed). In some examples (e.g., after the deepfake classification model information has been deployed), the media file may be an image and/or video that has been downloaded, streamed, and/or otherwise obtained or displayed at the processing device 108.

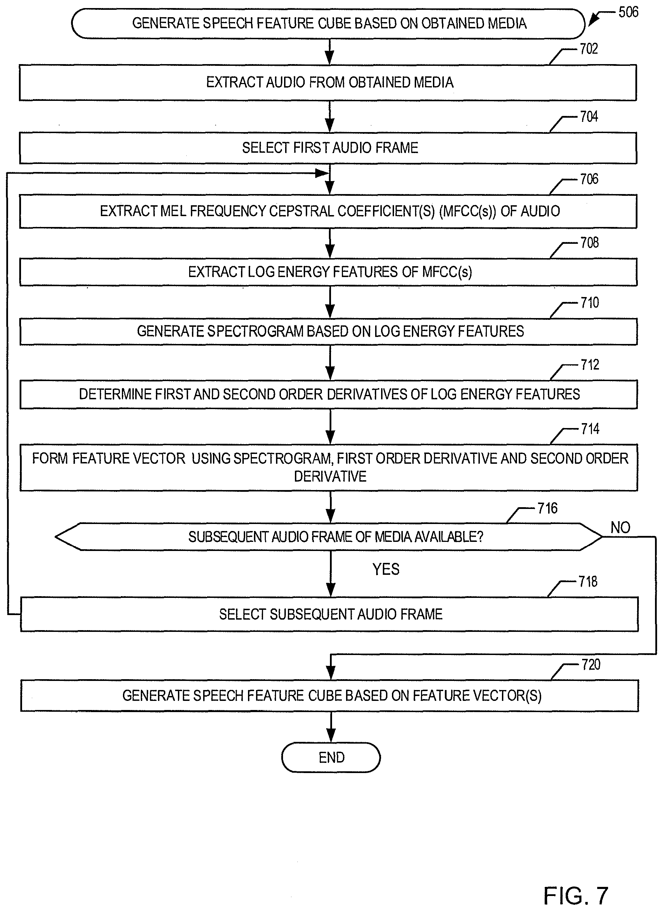

At block 504, the example video processing engine 204 generates a visual feature cube based on the obtained media frames, as further described below in conjunction with FIG. 6. The visual feature cube may include a plurality of processed video frames corresponding to the media for a duration of time. At block 506, the example audio processing engine 206 generates a speech features cube based on the obtained media frames, as further described below in conjunction with FIG. 7. The speech feature cube may include a plurality of processed audio frames corresponding to the media for the duration of time. In some examples, blocks 504 and 506 are done in parallel.

At block 508, the example audio model 210 classifies the speech feature cube to generate an audio classification value. For example, the audio model 210 may input the speech feature cube and pass the speech feature cube in the convolutional layers of the audio model 210 to generate the audio classification value. The audio classification value corresponds to the sound(s) that is/are being made by a human in the media for the duration of time.

At block 510, the example video model 208 classifies the visual feature cube to generate an video classification value. For example, the video model 208 may input the visual feature cube and pass the visual feature cube in the convolutional layers of the video model 208 to generate the video classification value. The video classification value corresponds to the sound(s) that is/are being made by a human in the media for the duration of time. In some examples, blocks 508 and 510 may be performed in parallel.

At block 512, the example output comparator 212 compares the audio classification value to the video classification value. For examples, the output comparator 212 may use the above Equations 1 and 2 to determine a distinction loss between the two output classification values. The example output comparator 212 then may perform a Euclidean distance between (a) the distinction loss of the audio and video classification values and (b) one or more distinction losses corresponding to one or more deepfake distinction losses (or a value representative of the deepfake distinction loss). If the distance satisfies a threshold amount, the output comparator 212 determines that the media is a deepfake. Additionally or alternatively, the example output comparator 212 then may perform a Euclidean distance between (a) the distinction loss of the audio and video classification values and (b) one or more distinction losses corresponding to one or more authentic distinction losses (or a value representative of the authentic distinction loss). If the distance satisfies a threshold amount, the output comparator 212 determines that the media is authentic.

At block 514, the example output comparator 212 determines if the audio classification value matches the video classification value with a threshold amount (e.g., by comparing the Euclidean distance between the distinction loss between the audio classification and the video classification) value to one or more thresholds). If the example output comparator 212 determines that the audio classification value does not match the video classification value within a threshold (block 514: NO), the example output comparator 212 classifies the media as a deepfake (block 516). If the example output comparator 212 determines that the audio classification value matches the video classification value within a threshold (block 514: YES), the example output comparator 212 classifies the media as authentic. (block 518).

At block 520, the example report generator 214 generates a mapping criterion based on the classification (e.g., a representation of the distinction loss with respect to the authentic media and/or authentic media). At block 522, the example report generator 214 generates a port including the classification and/or the mapping criterion. At block 524, the example network interface 200 transmits the report to a server (e.g., the example server 102 and/or another server). At block 526, the example component interface 202 displays an indication that the media is a deepfake and/or prevents the display of the media. As described above, the component interface 202 may prevent the user from viewing the media until it has confirmed that the media corresponds to a deepfake.

FIG. 6 is an example flowchart representative of machine readable instructions 504 that may be executed to implement the example deepfake analyzer 110 of FIG. 2 to generate a visual feature cube based on obtained media, as described above in conjunction with block 504 of FIG. 5. Although the instructions 504 may be used to implement the example deepfake analyzer 110 of FIG. 2, the instructions 504 may be described in conjunction with any type of deepfake analyzer.

At block 602, the example video processing engine 204 selects a first video frame of the obtained media. At block 604, the example video processing engine 204 performs a dynamic gamma correction on the video frame. The example video processing engine 204 may perform the dynamic Gamma correction framework to account for any illumination/-brightness invariance n the video frame. At block 606, the example video processing engine 204 generates a constant frame rate of the video frame. For example, the video processing engine 204 may pos-process the video to maintain a constant frame rate of 30 frames per second.

At block 608, the example video processing engine 204 detects and/or tracks a face in the media frame. The example video processing engine 204 may detect and/or track the face using the OpenCV dlib library. At block 610, the example video processing engine 204 extracts a mouth region of the detected face (e.g., by cropping the parts of the frame out that do not correspond to a mouth). At block 611, the example video processing engine 204 forms a feature vector for the video frame (e.g., based on data corresponding to the extracted mouth region of the face). At block 612, the example video processing engine 204 determines if a subsequent video frame of the media is available.

If the example video processing engine 204 determines that a subsequent video frame of the media is available (block 612: YES), the example video processing engine 204 selects a subsequent video frame (block 614) and control returns to block 604. If the example video processing engine 204 determines that a subsequent video frame of the media is not available (block 612: NO), the example video processing engine 204 generates the visual feature cube based on the formed feature vector(s) (block 616).

FIG. 7 is an example flowchart representative of machine readable instructions 506 that may be executed to implement the example deepfake analyzer 110 of FIG. 2 to generate an audio feature cube and/or speech feature cube based on obtained media, as described above in conjunction with block 506 of FIG. 5. Although the instructions 506 may be used to implement the example deepfake analyzer 110 of FIG. 2, the instructions 506 may be described in conjunction with any type of deepfake analyzer.

At block 702, the example audio processing engine 206 extracts the audio from the obtained media. For example, the audio processing engine 206 may use the ffmpeg framework to extract the audio filed from the media. At block 704, the example audio processing engine 206 selects a first audio frame of the obtained media. At block 706, the example audio processing engine 206 extracts the MFCCs from the selected audio frame. As described above the MFCCs of an audio signal describe the overall shape of a spectral envelope. At block 708, the example audio processing engine 206 extracts the log energy features of the MFCCs. As described above, the log energies ensure that the features of the audio posses a local characteristic.

At block 710, the example audio processing engine 206 generates a spectrogram based on the log energy features. At block 712, the example audio processing engine 206 determines a first order derivative of the log energy features and a second order derivative of the log energy features. At block 714, the example audio processing engine 206 forms a feature vector using the spectrogram, the first order derivative, and the second order derivative.

At block 716, the example audio processing engine 206 determines if a subsequent audio frame of the media is available. If the example audio processing engine 206 determines that a subsequent audio frame of the media is available (block 716: YES), the example audio processing engine 206 selects a subsequent audio frame (block 718) and control returns to block 706. If the example audio processing engine 206 determines that a subsequent audio frame of the media is not available (block 716: NO), the example audio processing engine 206 generates the speech feature cube based on the formed feature vector(s) (block 720).

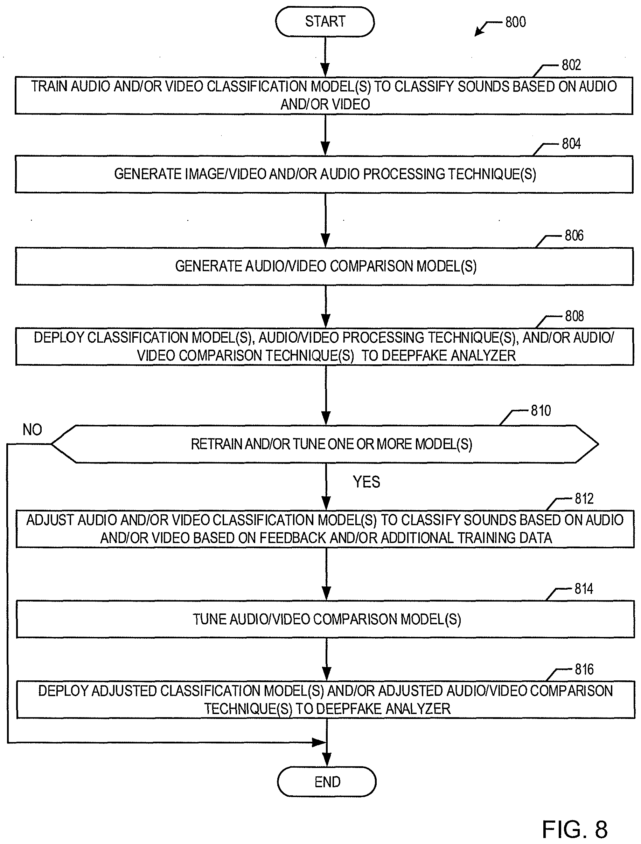

FIG. 8 is an example flowchart representative of machine readable instructions 800 that may be executed to implement the example AI trainer 104 of FIG. 3 to train and modify/tune a deepfake classification model. Although the instruction 800 may be used to implement the example AI trainer 104 of FIG. 3, the instructions 800 may be described in conjunction with any type of AI training server.

At block 802, the example deepfake classification model trainer 300 trains the deepfake classification models including an audio-based model to classify speech sounds made by a human based on the audio of media and a video-based model to classify speech sounds made by a human based on the video of media (e.g., the movement and/or positioning of a mouth during speech). In some examples, the deepfake classification model trainer 300 trains the model(s) based on a portion of the known sounds from audio and/or video, reserving other portion(s) of the dataset to test the initially trained model to further tune and/or modify the model to be more accurate prior to deploying (e.g., using the example classification analyzer 402), as further described above in conjunction with FIG. 4.

At block 804, the example deepfake classification model trainer 400 generates the image/video and/or audio processing techniques. The image/video and/or audio processing techniques corresponds to the how a speech feature cube and a visual feature cube is to be created from input media. At block 806, the example deepfake classification model trainer 400 generates the audio/video comparison model(s). The deepfake classification model trainer 400 may use known deepfake and authentic media (e.g., training data) to determine how to compare the audio classification with the video classification to determine if the media is authentic or a deepfake. For example, the deepfake classification model trainer 400 may determine that a distinction loss function is to be used where the output distinction loss is compared to one or more authentic media and/or one or more deepfake media (e.g., using a Euclidean distance) to determine whether input media is more similar to authentic media or deepfake media.

At block 808, the example network interface 406 and/or the example component interface 408 deploys the deepfake classification model(s) (e.g., one or more of the audio based model, the video based model, and the audio/video comparison model) and/or the audio/video processing technique(s) to the deepfake analyzer 110. For example, the network interface 406 may deploy instructions, data, and/or an executable identifying how to adjust the weights of a neural network to implement the trained audio and/or video based models to the example processing device 108 (e.g., via the example network 106) after the deepfake classification model has been trained. In another example, the component interface 408 may transmit a partially trained deepfake classification models (e.g., with a portion of the dataset of known classifications) to the deepfake analyzer 110 implemented at the server 102. In this manner, the example deepfake analyzer 110 can use a second portion of the dataset to test the accuracy of the partially trained deepfake classification models.

At block 810, the example model modifier 404 determines whether to retrain and/or tune one or more of the deployed model(s). For example, the model modifier 404 may determine that one or more of the models need to be retrained when more than a threshold amount of new training data has been obtained or when a threshold amount of feedback and/or misclassifications have been received from the deployed model(s) (e.g., via reports generated by deepfake analyzers (the deepfake analyzer 110 and/or other devices that implement the deepfake analyzer 110)). If the example model modifier 404 determines that the one or more models(s) are not to be retrained (block 810: NO), the instructions end.

If the example model modifier 404 determines that the one or more models(s) are to be retrained (block 810: YES), the example deepfake classification model trainer 300 adjusts the deepfake classification model(s) based on the additional data (e.g., feedback or reports) (block 812). For example, the deepfake classification model trainer 300 may retrain the audio-based model to classify speech sounds made by a human based on the audio of media and/or the video-based model to classify speech sounds made by a human based on the video of media (e.g., the movement and/or positioning of a mouth during speech).

At block 814, the example deepfake classification model trainer 300 tunes the audio/video comparison model(s) based on the feedback and/or additional training data. At block 816, the example network interface 406 and/or the example component interface 408 deploys the adjusted deepfake classification model(s) (e.g., one or more of the audio based model, the video based model, and the audio/video comparison model) to the deepfake analyzer 110.

FIG. 9 is a block diagram of an example processor platform 900 structured to execute the instructions of FIGS 5-7 to implement the deepfake analyzer 110 of FIG. 2. The processor platform 900 can be, for example, a server, a personal computer, a workstation, a web plugin tool, a self-learning machine (e.g., a neural network), a mobile device (e.g., a cell phone, a smart phone, a tablet such as an iPad™), an Internet appliance, or any other type of computing device.

The processor platform 900 of the illustrated example includes a processor 912. The processor 912 of the illustrated example is hardware. For example, the processor 912 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example network interface 200, the example component interface 202, the example video processing engine 204, the example audio processing engine 206, the example video model 208, the example audio model 210, the example output comparator 212, and the example report generator 214,.

The processor 912 of the illustrated example includes a local memory 913 (e.g., a cache). In the example of FIG. 9, the example local memory 913 implements the example model data storage 216. The processor 912 of the illustrated example is in communication with a main memory including a volatile memory 914 and a non-volatile memory 916 via a bus 918. The volatile memory 914 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 916 may be implemented by flash memory and/or any other desired type of memory device. Access to the main memory 914, 916 is controlled by a memory controller.

The processor platform 900 of the illustrated example also includes an interface circuit 920. The interface circuit 920 may be implemented by any type of interface standard, such as an Ethernet interface, a universal serial bus (USB), a Bluetooth® interface, a near field communication (NFC) interface, and/or a PCI express interface.

In the illustrated example, one or more input devices 922 are connected to the interface circuit 920. The input device(s) 922 permit(s) a user to enter data and/or commands into the processor 912. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 924 are also connected to the interface circuit 920 of the illustrated example. The output devices 924 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 920 of the illustrated example, thus, typically includes a graphics driver card, a graphics driver chip and/or a graphics driver processor.

The interface circuit 920 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 926. The communication can be via, for example, an Ethernet connection, a digital subscriber line (DSL) connection, a telephone line connection, a coaxial cable system, a satellite system, a line-of-site wireless system, a cellular telephone system, etc.

The processor platform 900 of the illustrated example also includes one or more mass storage devices 928 for storing software and/or data. Examples of such mass storage devices 928 include floppy disk drives, hard drive disks, compact disk drives, Blu-ray disk drives, redundant array of independent disks (RAID) systems, and digital versatile disk (DVD) drives.

The machine executable instructions 932 of FIGS. 5-7 may be stored in the mass storage device 928, in the volatile memory 914, in the non-volatile memory 916, and/or on a removable non-transitory computer readable storage medium such as a CD or DVD.

FIG. 10 is a block diagram of an example processor platform 1000 structured to execute the instructions of FIG. 8 to implement the AI trainer 104 of FIG. 4. The processor platform 1000 can be, for example, a server, a personal computer, a workstation, a self-learning machine (e.g., a neural network), a mobile device (e.g., a cell phone, a smart phone, a tablet such as an iPad™), an Internet appliance, or any other type of computing device.

The processor platform 1000 of the illustrated example includes a processor 1012. The processor 1012 of the illustrated example is hardware. For example, the processor 1012 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example deepfake classification model trainer 400, the example classification analyzer 402, the example model modifier 404, the example network interface 406, the example component interface 408, and the example user interface 410.

The processor 1012 of the illustrated example includes a local memory 1013 (e.g., a cache). The processor 1012 of the illustrated example is in communication with a main memory including a volatile memory 1014 and a non-volatile memory 1016 via a bus 1018. The volatile memory 1014 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 1016 may be implemented by flash memory and/or any other desired type of memory device. Access to the main memory 1014, 1016 is controlled by a memory controller.

The processor platform 1000 of the illustrated example also includes an interface circuit 1020. The interface circuit 1020 may be implemented by any type of interface standard, such as an Ethernet interface, a universal serial bus (USB), a Bluetooth® interface, a near field communication (NFC) interface, and/or a PCI express interface.

In the illustrated example, one or more input devices 1022 are connected to the interface circuit 1020. The input device(s) 1022 permit(s) a user to enter data and/or commands into the processor 1012. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 1024 are also connected to the interface circuit 1020 of the illustrated example. The output devices 1024 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 1020 of the illustrated example, thus, typically includes a graphics driver card, a graphics driver chip and/or a graphics driver processor.

The interface circuit 1020 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1026. The communication can be via, for example, an Ethernet connection, a digital subscriber line (DSL) connection, a telephone line connection, a coaxial cable system, a satellite system, a line-of-site wireless system, a cellular telephone system, etc.

The processor platform 1000 of the illustrated example also includes one or more mass storage devices 1028 for storing software and/or data. Examples of such mass storage devices 1028 include floppy disk drives, hard drive disks, compact disk drives, Blu-ray disk drives, redundant array of independent disks (RAID) systems, and digital versatile disk (DVD) drives.

The machine executable instructions 1032 of FIG. 8 may be stored in the mass storage device 1028, in the volatile memory 1014, in the non-volatile memory 1016, and/or on a removable non-transitory computer readable storage medium such as a CD or DVD.

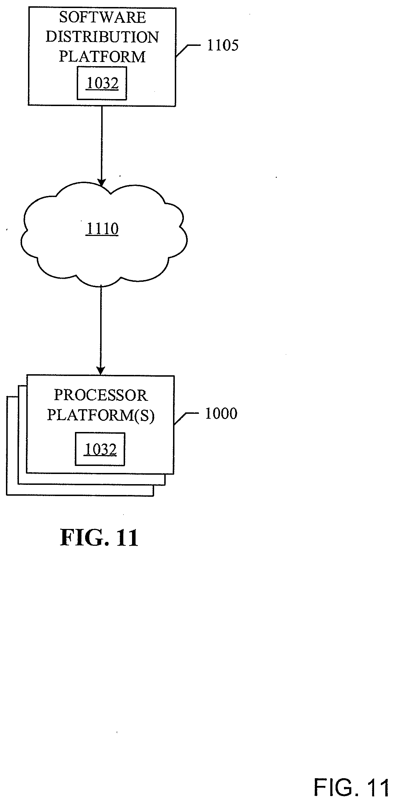

A block diagram illustrating an example software distribution platform 1105 to distribute software such as the example computer readable instructions 1032 of FIG. 10 to third parties is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 1032 of FIG. 10. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the computer readable instructions 1032, which may correspond to the example computer readable instructions 1032 of FIG. 10, as described above. The one or more servers of the example software distribution platform 1105 are in communication with a network 1110, which may correspond to any one or more of the Internet and/or any of the example networks (e.g., the example network 106 of FIG. 1) described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 1032 from the software distribution platform 1105. For example, the software, which may correspond to the example computer readable instructions 1032 of FIG. 10, may be downloaded to the example processor platform 1000, which is to execute the computer readable instructions 1032 to implement the AI trainer 104 and/or the deepfake analyzer 110 of FIGS. 1, 2, 3, and/or 4. In some example, one or more servers of the software distribution platform 1105 periodically offer, transmit, and/or force updates to the software (e.g., the example computer readable instructions 1032 of FIG. 10) to ensure improvements, patches, updates, etc. are distributed and applied to the software at the end user devices.

From the foregoing, it will be appreciated that example methods, apparatus and articles of manufacture have been disclosed that perform deepfake detection using audio and video features. The disclosed methods, apparatus and articles of manufacture improve the efficiency of using a computing device to detect deepfakes by classifying sounds made by a human in media using an audio-based AI model and a video-based AI model and comparing the resulting classifications to determine if media is authentic or a deepfake. In this manner, the accuracy of deepfake classification models are increased to be able to more accurately determine if the media file is or is not deepfake. Additionally, using examples disclosed herein, the trust in classifier predictions is improved. The disclosed methods, apparatus and articles of manufacture are accordingly directed to one or more improvement(s) in the functioning of a computer.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

**Claims**

1. An apparatus (110) comprising:

   means for processing video (204), the means for processing video (204) to:

   perform dynamic gamma correction on a video frame of the video from media; and
   process the video frames to maintain a constant frame rate;

   means for processing audio (206), the means for processing audio (206) to:

   extract log energy features from a mel frequency cepstral coefficients, MFCCs, of an audio frame of the audio from the media; and
   generate a vector using a spectrogram based on the extracted log energy features;

   means for outputting a first classification value (210) representing a sound made by a human based on the vector;
   means for analyzing spatial and temporal information corresponding to lips of the human to output a second classification value (208) representing the sound made by the human based on the processed video frames of the media; and
   means for determining (212) that the media is a deepfake based on a comparison of the first classification value to the second classification value.

2. The apparatus (110) of claim 1, wherein:

   the means for outputting the first classification value (210) is to output the first classification value based on a plurality of audio frames extracted from the media within a duration of time; and
   the means for outputting the second classification value (208) is to output the second classification value based on a plurality of video frames of the media within the duration of time.

3. The apparatus (110) of claim 1, wherein:

   the means for processing the audio (206) is to generate a speech features cube based on the vector of the audio, the speech features cube input into the means for outputting the first classification value (210) to generate the first classification value; and

the means for processing the video (204) is to generate a video features cube based on mouth regions of humans in a video portion of the media, the video features cube input into the means for outputting the second classification value (208) to generate the second classification value.

4. The apparatus (110) of claim 1, wherein the means for determining (212) is to determine that the media is a deepfake based on a comparison of how similar the first classification value is to the second classification value.

5. The apparatus (110) of claim 1, wherein the means for determining (212) is to determine that the media is a deepfake based on at least one of a distinction loss function or a Euclidean distance.

6. The apparatus (110) of claim 1, further including means for generating a report (214) identifying the media as a deepfake.

7. The apparatus (110) of claim 6, further including means for transmitting (214) the report to a server (102).

8. The apparatus (110) of claim 6, wherein the means for generating (214) is to at least one of cause a user interface to generate a popup identifying that the media is a deepfake or prevent the media from being output.

9. The apparatus (110) of claim 1, wherein:

the means for outputting the first classification value (210) includes a first convolution layer, a second convolution later, a third convolution layer, and a first fully connected layer; and

the means for outputting the second classification value (208) includes a fourth convolution layer, a fifth convolution later, a sixth convolution layer, and a second fully connected layer.

10. A method comprising:

performing, by executing an instruction with a processor (108), dynamic gamma correction on a video frame of video from media; and

processing, by executing an instruction with the processor (108), the video frames to maintain a constant frame rate;

extracting, by executing an instruction with the processor (108), log energy features from a mel frequency cepstral coefficients, MFCCs, of an audio frame of audio from the media; and

generating, by executing an instruction with the processor (108), a vector using a spectrogram based on the extracted log energy features;

outputting, with a first artificial intelligence-based model, a first classification value representing a sound made by a human based on the vector;

analyzing, with a second artificial intelligence-based model, spatial and temporal information corresponding to lips of the human to output a second classification value representing the sound made by the human based on the processed video frames of the media; and

determining, by executing an instruction with the processor (108), that the media is a deepfake based on a comparison of the first classification value to the second classification value.

11. The method of claim 10, wherein:

outputting the first classification value based on a plurality of audio frames extracted from the media within a duration of time; and

outputting the second classification value based on a plurality of video frames of the media within the duration of time.

12. The method of claim 10, further including:

generating a speech features cube based on the vector of the audio, the speech features cube input into the first artificial intelligence-based model to generate the first classification value; and

generating a video features cube based on mouth regions of humans in a video portion of the media, the video features cube input into the second artificial intelligence-based model to generate the second classification value.

13. The method of claim 10, further including determining that the media is a deepfake based on a comparison of how similar the first classification value is to the second classification value.

14. The method of claim 10, further including determining that the media is a deepfake based on at least one of a distinction loss function or a Euclidean distance.

15. A computer readable storage medium comprising instructions which, when executed, cause one or more processors to realize an apparatus of claims 1-9.

**Patentansprüche**

1. Vorrichtung (110), umfassend:

   ein Mittel zum Verarbeiten von Video (204), wobei das Mittel zum Verarbeiten von Video (204) dazu dient:

   eine dynamische Gammakorrektur auf einem Video-Frame des Videos aus einem Medium durchzuführen; und
   die Video-Frames zu verarbeiten, um eine konstante Frame-Rate beizubehalten;

   ein Mittel zum Verarbeiten von Audio (206), wobei das Mittel zum Verarbeiten von Audio (206) dazu dient:

   Merkmale logarithmischer Energie aus Mel-Frequenz-Cepstral-Koeffizienten, MFCC, von einem Audio-Frame des Audios aus dem Medium zu extrahieren; und
   einen Vektor unter Verwendung eines Spektrogramms auf der Grundlage der extrahierten Merkmale logarithmischer Energie zu erzeugen;

   ein Mittel zum Ausgeben eines ersten Klassifikationswertes (210), der einen von einem Menschen erzeugten Ton repräsentiert, auf der Grundlage des Vektors;
   ein Mittel zum Analysieren von räumlicher und zeitlicher Information, die Lippen des Menschen entspricht, um einen zweiten Klassifikationswert (208) auszugeben, der den von dem Menschen erzeugten Ton repräsentiert, auf der Grundlage der verarbeiteten Video-Frames von dem Medium; und
   ein Mittel zum Bestimmen (212), dass das Medium ein Deepfake ist, auf der Grundlage eines Vergleichs des ersten Klassifikationswertes mit dem zweiten Klassifikationswert.

2. Vorrichtung (110) nach Anspruch 1, wobei:

   das Mittel zum Ausgeben des ersten Klassifikationswertes (210) dazu dient, den ersten Klassifikationswert auf der Grundlage einer Vielzahl von Audio-Frames auszugeben, die aus dem Medium innerhalb einer Zeitspanne extrahiert wurden; und
   das Mittel zum Ausgeben des zweiten Klassifikationswertes (208) dazu dient, den zweiten Klassifikationswert auf der Grundlage einer Vielzahl von Video-Frames von dem Medium innerhalb der Zeitspanne auszugeben.

3. Vorrichtung (110) nach Anspruch 1, wobei:

   das Mittel zum Verarbeiten von Audio (206) dazu dient, einen Sprachmerkmal-Cube auf der Grundlage des Vektors des Audios zu erzeugen, wobei der Sprachmerkmal-Cube in das Mittel zum Ausgeben des ersten Klassifikationswertes (210) eingegeben wird, um den ersten Klassifikationswert zu erzeugen; und
   das Mittel zum Verarbeiten von Video (204) dazu dient, einen Videomerkmal-Cube auf der Grundlage von Mundregionen von Menschen in einem Videoabschnitt des Mediums zu erzeugen, wobei der Videomerkmal-Cube in das Mittel zum Ausgeben des zweiten Klassifikationswertes (208) eingegeben wird, um den zweiten Klassifikationswert zu erzeugen.

4. Vorrichtung (110) nach Anspruch 1, wobei das Mittel zum Bestimmen (212) dazu dient, auf der Grundlage eines Vergleichs, wie ähnlich der erste Klassifikationswert dem zweiten Klassifikationswert ist, zu bestimmen, dass das Medium ein Deepfake ist.

5. Vorrichtung (110) nach Anspruch 1, wobei das Mittel zum Bestimmen (212) dazu dient, auf der Grundlage mindestens einer Unterscheidungsverlustfunktion oder eines euklidischen Abstands zu bestimmen, dass das Medium ein Deepfake ist.

6. Vorrichtung (110) nach Anspruch 1, ferner enthaltend ein Mittel zum Erzeugen eines Berichts (214), der das Medium als ein Deepfake identifiziert.

7. Vorrichtung (110) nach Anspruch 6, ferner enthaltend ein Mittel zum Übertragen (214) des Berichts an einen Server (102).

8. Vorrichtung (110) nach Anspruch 6, wobei das Mittel zum Erzeugen (214) eine Benutzerschnittstelle dazu veranlasst, ein Popup zu erzeugen, das identifiziert, dass das Medium ein Deepfake ist, und/oder zu verhindern, dass das Medium ausgegeben wird.

9. Vorrichtung (110) nach Anspruch 1, wobei:

das Mittel zum Ausgeben des ersten Klassifikationswertes (210) eine erste Faltungsschicht, eine zweite Faltungsschicht, eine dritte Faltungsschicht und eine erste vollständig verbundene Schicht enthält; und
das Mittel zum Ausgeben des zweiten Klassifikationswertes (208) eine vierte Faltungsschicht, eine fünfte Faltungsschicht, eine sechste Faltungsschicht und eine zweite vollständig verbundene Schicht enthält.

10. Verfahren, umfassend:

Durchführen einer dynamischen Gammakorrektur auf einem Video-Frame von Video aus einem Medium durch Ausführen einer Anweisung mit einem Prozessor (108); und
Verarbeiten der Video-Frames durch Ausführen einer Anweisung mit dem Prozessor (108), um eine konstante Frame-Rate beizubehalten;
Extrahieren von Merkmalen logarithmischer Energie aus Mel-Frequenz-Cepstral-Koeffizienten, MFCC, von einem Audio-Frame von Audio aus dem Medium durch Ausführen einer Anweisung mit dem Prozessor (108); und
Erzeugen eines Vektors unter Verwendung eines Spektrogramms auf der Grundlage der extrahierten Merkmale logarithmischer Energie durch Ausführen einer Anweisung mit dem Prozessor (108);
Ausgeben eines ersten Klassifikationswertes, der einen von einem Menschen erzeugten Ton repräsentiert, auf der Grundlage des Vektors mit einem ersten auf künstlicher Intelligenz basierenden Modell;
Analysieren von räumlicher und zeitlicher Information, die Lippen des Menschen entspricht, um einen zweiten Klassifikationswert auszugeben, der den von dem Menschen erzeugten Ton repräsentiert, auf der Grundlage der verarbeiteten Video-Frames des Mediums mit einem zweiten auf künstlicher Intelligenz basierenden Modell; und
Bestimmen, dass das Medium ein Deepfake ist, auf der Grundlage eines Vergleichs des ersten Klassifikationswertes mit dem zweiten Klassifikationswert durch Ausführen einer Anweisung mit dem Prozessor (108).

11. Verfahren nach Anspruch 10, wobei:

Ausgeben des ersten Klassifikationswertes auf der Grundlage einer Vielzahl von Audio-Frames, die aus dem Medium innerhalb einer Zeitspanne extrahiert wurden, erfolgt; und
Ausgeben des zweiten Klassifikationswertes auf der Grundlage einer Vielzahl von Video-Frames von dem Mediums innerhalb der Zeitspanne erfolgt.

12. Verfahren nach Anspruch 10, ferner enthaltend:

Erzeugen eines Sprachmerkmal-Cubes auf der Grundlage des Vektors des Audios, wobei der Sprachmerkmal-Cube in das erste auf künstlicher Intelligenz basierende Modell eingegeben wird, um den ersten Klassifikationswert zu erzeugen; und
Erzeugen eines Videomerkmal-Cubes auf der Grundlage von Mundregionen von Menschen in einem Videoabschnitt des Mediums, wobei der Videomerkmal-Cube in das zweite auf künstlicher Intelligenz basierende Modell eingegeben wird, um den zweiten Klassifikationswert zu erzeugen.

13. Verfahren nach Anspruch 10, ferner enthaltend Bestimmen, dass das Medium ein Deepfake ist, auf der Grundlage eines Vergleichs, wie ähnlich der erste Klassifikationswert dem zweiten Klassifikationswert ist.

14. Verfahren nach Anspruch 10, ferner enthaltend Bestimmen, dass das Medium ein Deepfake ist, auf der Grundlage mindestens einer Unterscheidungsverlustfunktion oder eines euklidischen Abstands.

15. Computerlesbares Speichermedium, das Anweisungen enthält, die, wenn sie ausgeführt werden, einen oder mehrere Prozessoren dazu veranlassen, eine Vorrichtung nach den Ansprüchen 1-9 zu realisieren.

**Revendications**

1. Appareil (110) comprenant :

   un moyen pour traiter une vidéo (204), le moyen pour traiter une vidéo (204) étant destiné à :

   réaliser une correction de gamma dynamique sur une trame vidéo de la vidéo provenant d'un support ; et
   traiter les trames vidéo pour maintenir un débit de trames constant ;
   un moyen pour traiter un audio (206), le moyen pour traiter un audio (206) étant destiné à :

   extraire des caractéristiques d'énergie logarithmiques de coefficients cepstraux de fréquences en échelle Mel, MFCC, d'une trame audio de l'audio provenant du support ; et
   générer un vecteur en utilisant un spectrogramme basé sur les caractéristiques d'énergie logarithmiques extraites ;
   un moyen pour sortir une première valeur de classification (210) représentant un son fait par un humain sur la base du vecteur ;
   un moyen pour analyser des informations spatiales et temporelles correspondant aux lèvres de l'humain pour sortir une seconde valeur de classification (208) représentant le son fait par l'humain sur la base des trames vidéo traitées du support ; et
   un moyen pour déterminer (212) que le support est un deepfake sur la base d'une comparaison de la première valeur de classification avec la seconde valeur de classification.

2. Appareil (110) selon la revendication 1, dans lequel :

   le moyen pour sortir la première valeur de classification (210) est destiné à sortir la première valeur de classification sur la base d'une pluralité de trames audio extraites du support dans une période de temps ; et
   le moyen pour sortir la seconde valeur de classification (208) est destiné à sortir la seconde valeur de classification sur la base d'une pluralité de trames vidéo du support dans la période de temps.

3. Appareil (110) selon la revendication 1, dans lequel :

   le moyen pour traiter l'audio (206) est destiné à générer un cube de caractéristiques vocales sur la base du vecteur de l'audio, le cube de caractéristiques vocales étant entré dans le moyen pour sortir la première valeur de classification (210) pour générer la première valeur de classification ; et
   le moyen pour traiter la vidéo (204) est destiné à générer un cube de caractéristiques vidéo sur la base de régions buccales d'humains dans une partie vidéo du support, le cube de caractéristiques vidéo étant entré dans le moyen pour sortir la seconde valeur de classification (208) pour générer la seconde valeur de classification.

4. Appareil (110) selon la revendication 1, dans lequel le moyen pour déterminer (212) est destiné à déterminer que le support est un deepfake sur la base d'une comparaison de la similarité de la première valeur de classification et de la seconde valeur de classification.

5. Appareil (110) selon la revendication 1, dans lequel le moyen pour déterminer (212) est destiné à déterminer que le support est un deepfake sur la base d'au moins une parmi une fonction de perte de distinction ou une distance euclidienne.

6. Appareil (110) selon la revendication 1, comportant en outre un moyen pour générer un rapport (214) identifiant le support comme un deepfake.

7. Appareil (110) selon la revendication 6, comportant en outre un moyen pour transmettre (214) le rapport à un serveur (102).

8. Appareil (110) selon la revendication 6, dans lequel le moyen pour générer (214) est destiné à au moins un parmi amener une interface utilisateur à générer une fenêtre contextuelle identifiant que le support est un deepfake ou empêcher la sortie du support.

9. Appareil (110) selon la revendication 1, dans lequel :

le moyen pour sortir la première valeur de classification (210) comporte une première couche de convolution, une deuxième couche de convolution, une troisième couche de convolution et une première couche entièrement connectée ; et
le moyen pour sortir la seconde valeur de classification (208) comporte une quatrième couche de convolution, une cinquième couche de convolution, une sixième couche de convolution et une seconde couche entièrement connectée.

10. Méthode comprenant :

la réalisation, en exécutant une instruction avec un processeur (108), d'une correction de gamma dynamique sur une trame vidéo d'une vidéo provenant d'un support ; et
le traitement, en exécutant une instruction avec le processeur (108), des trames vidéo pour maintenir un débit de trames constant ;
l'extraction, en exécutant une instruction avec le processeur (108), de caractéristiques d'énergie logarithmiques de coefficients cepstraux de fréquences en échelle Mel, MFCC, d'une trame audio d'un audio provenant du support ; et
la génération, en exécutant une instruction avec le processeur (108), d'un vecteur en utilisant un spectrogramme sur la base des caractéristiques d'énergie logarithmiques extraites ;
la sortie, avec un premier modèle basé sur une intelligence artificielle, d'une première valeur de classification représentant un son fait par un humain sur la base du vecteur ;
l'analyse, avec un second modèle basé sur une intelligence artificielle, d'informations spatiales et temporelles correspondant aux lèvres de l'humain pour sortir une seconde valeur de classification représentant le son fait par l'humain sur la base des trames vidéo traitées du support ; et
la détermination, en exécutant une instruction avec le processeur (108), que le support est un deepfake sur la base d'une comparaison de la première valeur de classification avec la seconde valeur de classification.

11. Méthode selon la revendication 10, dans laquelle :

la sortie de la première valeur de classification est basée sur une pluralité de trames audio extraites du support dans une période de temps ; et
la sortie de la seconde valeur de classification est basée sur une pluralité d'images vidéo du support dans la période de temps.

12. Méthode selon la revendication 10, comportant en outre :

la génération d'un cube de caractéristiques vocales sur la base du vecteur de l'audio, le cube de caractéristiques vocales étant entré dans le premier modèle basé sur une intelligence artificielle pour générer la première valeur de classification ; et
la génération d'un cube de caractéristiques vidéo sur la base de régions buccales d'humains dans une partie vidéo du support, le cube de caractéristiques vidéo étant entré dans le second modèle basé sur une intelligence artificielle pour générer la seconde valeur de classification.

13. Méthode selon la revendication 10, comportant en outre la détermination que le support est un deepfake sur la base d'une comparaison de la similitude de la première valeur de classification et de la seconde valeur de classification.

14. Méthode selon la revendication 10, comportant en outre la détermination que le support est un deepfake sur la base d'au moins une parmi une fonction de perte de distinction ou une distance euclidienne.

15. Support de stockage lisible par ordinateur comprenant des instructions qui, lorsqu'elles sont exécutées, amènent un ou plusieurs processeurs à mettre en œuvre un appareil selon les revendications 1 à 9.

SERVER
102

AI TRAINER
104

100

NETWORK
106

PROCESSING DEVICE
108

DEEPFAKE
ANALYZER
110

FIG. 1

DEEPFAKE ANALYZER
110

| | | | |
|---|---|---|---|
| NETWORK INTERFACE 200 | VIDEO PROCESSING ENGINE 204 | VIDEO MODEL 208 | OUTPUT COMPARATOR 212 |

MODEL DATA STORAGE 216

| | | | |
|---|---|---|---|
| COMPONENT INTERFACE 202 | AUDIO PROCESSING ENGINE 206 | AUDIO MODEL 210 | REPORT GENERATOR 214 |

FIG. 2

**VIDEO MODEL 208**

Visual feature cube →

FIRST CONVOLUTION LAYER 302 → SECOND CONVOLUTION LAYER 304 → THIRD CONVOLUTION LAYER 306 → FULLY CONNECTED LAYER 308 → Output classification

**FIG. 3A**

**AUDIO MODEL 210**

Speech feature cube →

FIRST CONVOLUTION LAYER 310 → SECOND CONVOLUTION LAYER 312 → THIRD CONVOLUTION LAYER 314 → FULLY CONNECTED LAYER 316 → Output classification

**FIG. 3B**

23

AI TRAINER
104

| DEEPFAKE CLASSIFICATION MODEL TRAINER 400 | CLASSIFICATION ANALYZER 402 | MODEL MODIFIER 404 |

| NETWORK INTERFACE 406 | COMPONENT INTERFACE 408 | USER INTERFACE 410 |

FIG. 4

START

500

502
OBTAIN MEDIA FRAME(S)

504
GENERATE VISUAL FEATURE CUBE BASED ON OBTAINED MEDIA FRAME(S)

506
GENERATE SPEECH FEATURE CUBE BASED ON OBTAINED MEDIA FRAME(S)

508
CLASSIFY SPEECH FEATURE CUBE TO GENERATE AUDIO CLASSIFICATION VALUE

510
CLASSIFY VIDEO FEATURE CUBE TO GENERATE VIDEO CLASSIFICATION VALUE

512
COMPARE AUDIO CLASSIFICATION VALUE TO VIDEO CLASSIFICATION VALUE

514
DOES AUDIO CLASSIFICATION VALUE MATCH VIDEO CLASSIFICATION VALUE WITHIN A THRESHOLD?

YES

NO

516
CLASSIFY MEDIA AS DEEPFAKE

518
CLASSIFY MEDIA AS NON-DEEPFAKE

520
GENERATE MAPPING CRITERION BASED ON CLASSIFICATION

522
GENERATE REPORT INCLUDING CLASSIFICATION AND/OR MAPPING CRITERION

524
TRANSMIT REPORT TO SERVER

526
DISPLAY INDICATION THAT MEDIA IS A DEEPFAKE AND/OR PREVENT DISPLAY OF MEDIA

END

FIG. 5

GENERATE VISUAL FEATURE CUBE BASED ON OBTAINED MEDIA — 504

602

SELECT FIRST VIDEO FRAME

604

PERFORM DYNAMIC GAMMA CORRECTION ON THE VIDEO FRAME

606

GENERATE CONSTANT FRAME RATE

608

DETECT AND/OR TRACK FACE IN MEDIA FRAME

610

EXTRACT MOUTH REGION OF FACE

611

FORM FEATURE VECTOR FOR VIDEO FRAME

612

SUBSEQUENT VIDEO FRAME OF MEDIA AVAILABLE?    NO

YES

614

SELECT SUBSEQUENT VIDEO FRAME

616

GENERATE VISUAL FEATURE CUBE BASED ON FEATURE VECTOR(S)

END

FIG. 6

GENERATE SPEECH FEATURE CUBE BASED ON OBTAINED MEDIA — 506

↓

EXTRACT AUDIO FROM OBTAINED MEDIA — 702

↓

SELECT FIRST AUDIO FRAME — 704

↓

EXTRACT MEL FREQUENCY CEPSTRAL COEFFICIENT(S) (MFCC(s)) OF AUDIO — 706

↓

EXTRACT LOG ENERGY FEATURES OF MFCC(s) — 708

↓

GENERATE SPECTROGRAM BASED ON LOG ENERGY FEATURES — 710

↓

DETERMINE FIRST AND SECOND ORDER DERIVATIVES OF LOG ENERGY FEATURES — 712

↓

FORM FEATURE VECTOR USING SPECTROGRAM, FIRST ORDER DERIVATIVE AND SECOND ORDER DERIVATIVE — 714

↓

SUBSEQUENT AUDIO FRAME OF MEDIA AVAILABLE? — 716    NO

YES ↓

SELECT SUBSEQUENT AUDIO FRAME — 718

↓

GENERATE SPEECH FEATURE CUBE BASED ON FEATURE VECTOR(S) — 720

↓

END

FIG. 7

START — 800

TRAIN AUDIO AND/OR VIDEO CLASSIFICATION MODEL(S) TO CLASSIFY SOUNDS BASED ON AUDIO AND/OR VIDEO — 802

GENERATE IMAGE/VIDEO AND/OR AUDIO PROCESSING TECHNIQUE(S) — 804

GENERATE AUDIO/VIDEO COMPARISON MODEL(S) — 806

DEPLOY CLASSIFICATION MODEL(S), AUDIO/VIDEO PROCESSING TECHNIQUE(S), AND/OR AUDIO/VIDEO COMPARISON TECHNIQUE(S) TO DEEPFAKE ANALYZER — 808

NO — RETRAIN AND/OR TUNE ONE OR MORE MODEL(S) — 810

YES

ADJUST AUDIO AND/OR VIDEO CLASSIFICATION MODEL(S) TO CLASSIFY SOUNDS BASED ON AUDIO AND/OR VIDEO BASED ON FEEDBACK AND/OR ADDITIONAL TRAINING DATA — 812

TUNE AUDIO/VIDEO COMPARISON MODEL(S) — 814

DEPLOY ADJUSTED CLASSIFICATION MODEL(S) AND/OR ADJUSTED AUDIO/VIDEO COMPARISON TECHNIQUE(S) TO DEEPFAKE ANALYZER — 816

END

FIG. 8

FIG. 9

FIG. 10

SOFTWARE
DISTRIBUTION
PLATFORM                        — 1105

1032

1110

PROCESSOR
PLATFORM(S)                     — 1000

1032

**FIG. 11**

FIG. 11

# EP 4 050 571 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUGH KOMAL**. *Not made for each other- Audio-Visual Dissonance-based Deepfake Detection and Localization*

- **CHUNG JOON SON**. *Out of Time: Automated Lip Synce in the Wild*